(19) Europäisches Patentamt
European Patent Office
Office européen des brevets

(11) EP 4 489 167 A1

(12) **EUROPEAN PATENT APPLICATION**
published in accordance with Art. 153(4) EPC

(43) Date of publication:
**08.01.2025 Bulletin 2025/02**

(21) Application number: **23881938.7**

(22) Date of filing: **26.10.2023**

(51) International Patent Classification (IPC):
***H01M 10/0525** (2010.01)* ***H01M 10/0569** (2010.01)*

(52) Cooperative Patent Classification (CPC):
Y02E 60/10

(86) International application number:
**PCT/CN2023/126952**

(87) International publication number:
**WO 2024/088363 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.10.2022 CN 202211320709**

(71) Applicant: **Zhuhai Cosmx Power Battery Co., Ltd.**
**Zhuhai, Guangdong 519180 (CN)**

(72) Inventors:
- **LI, Yuju**
  **Zhuhai, Guangdong 519180 (CN)**
- **ZHU, Hui**
  **Zhuhai, Guangdong 519180 (CN)**

(74) Representative: **Murgitroyd & Company**
**Murgitroyd House**
**165-169 Scotland Street**
**Glasgow G5 8PL (GB)**

(54) **BATTERY**

(57) Disclosed is a battery, in particular a battery with high safety performance. According to the present disclosure, a percentage of an area of a double-sided hot melt adhesive to an area of a long and wide surface of a bare cell and a percentage of a mass of a carbonate solvent in an electrolyte solution to a total mass of an organic solvent in the electrolyte solution are optimized, so as to ensure optimal performance of the electrolyte solution while reducing an impact of the carbonate solvent on swelling of the double-sided hot melt adhesive, and maintain adhesive of the double-sided hot melt adhesive.

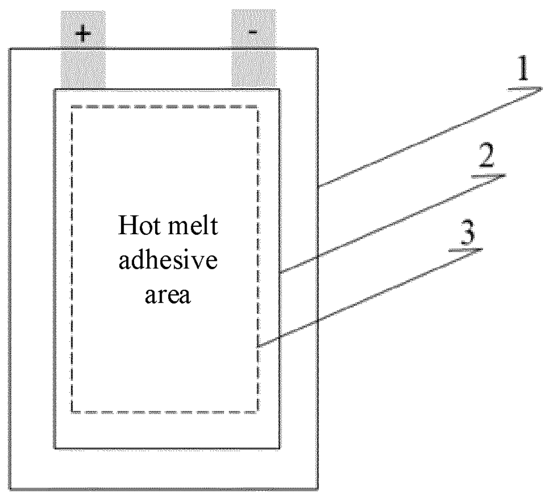


FIG. 1



Processed by Luminess, 75001 PARIS (FR)

## Description

### TECHNICAL FIELD

The present disclosure relates to the field of lithium-ion battery technologies, and specifically relates to a battery, in particular a lithium-ion battery with high safety.

### BACKGROUND

As people pay attention to depletion of non-renewable energy sources and environmental pollution, renewable and clean energy sources are developing rapidly. Lithium-ion batteries have features such as high energy density, long cycle life, low self-discharge rate, and environmental friendliness, and have been widely used in consumer electronic products, new energy-powered vehicles, and other power battery products.

With continuous expansion of the application field of the lithium-ion batteries, a requirement for safety performance of the lithium-ion batteries is constantly improved. Developing a safer lithium-ion battery is one of major requirements of the market. Large rate charge/discharge, over charge/discharge, and high temperature may cause short-term rise in surface temperature of lithium-ion batteries, and exacerbate side reactions and continue to generate heat. As a result, the internal temperature rapidly increases, resulting in thermal runaway, thus causing a safety accident. Cases such as drops and collisions easily cause an inner separator of a battery cell to be folded, resulting in a short-circuit, fire or even explosion. Generally, an outer layer of a bare cell of a lithium-ion battery is coated with an aluminum-plastic film, and a double-sided hot melt adhesive is attached between the bare cell and the aluminum-plastic film. The double-sided hot melt adhesive melts under hot pressure, and then is tightly bonded to the aluminum-plastic film at the outer layer, so that the bare cell is well fixed at a position in the aluminum plastic film, to prevent the bare cell from being moved in the aluminum-plastic film during a drop test process, thereby avoiding a case of a short-circuit caused when a separator of the bare cell is folded. Therefore, stickiness of the double-sided hot melt adhesive directly affects a pass rate of the drop test and safety performance of the battery.

### SUMMARY

To solve safety problems such as fire breakouts and explosions caused by a sharp increase in a temperature or inadvertent drop of a battery during use, according to the present disclosure, a percentage of an area of a double-sided hot melt adhesive to an area of a long and wide surface of a bare cell and a percentage of a mass of a carbonate solvent in an electrolyte solution to a total mass of an organic solvent in the electrolyte solution are optimized, so as to ensure optimal performance of the electrolyte solution while reducing an impact of the carbonate solvent on swelling of the double-sided hot melt adhesive, and maintain adhesive of the double-sided hot melt adhesive.

The present disclosure is intended to be implemented by using the following technical solutions:

a battery, where the battery includes a bare cell, a double-sided hot melt adhesive, and an electrolyte solution; the double-sided hot melt adhesive is disposed on a long and wide surface of the bare cell; and the electrolyte solution includes a lithium salt, an organic solvent, and an additive, and the organic solvent includes at least one carbonate solvent;

the battery satisfies following condition:

$$0.5 \leq A/B \leq 2,$$

where A is a percentage of an area of the double-sided hot melt adhesive to an area of the long and wide surface of the bare cell, and B is a percentage of a mass of the carbonate solvent to a total mass of the organic solvent in the electrolyte solution.

According to an implementation of the present disclosure, A/B is 0.5, 0.6, 0.7, 0.8, 0.9, 1, 1.1, 1.2, 1.3, 1.4, 1.5, 1.6, 1.7, 1.8, 1.9, 2, or a point value in a range formed by any two of the foregoing values. When $A/B < 0.5$, the percentage of the area of the double-sided hot melt adhesive to the area of the long and wide surface of the bare cell is relatively small, there is no good effect of fixing the bare cell, thereby reducing safety performance of the battery (a drop pass rate is reduced); or the percentage of the mass of the carbonate solvent in the total mass of the organic solvent in the electrolyte solution is relatively high, so that swelling of the double-sided hot melt adhesive becomes large and viscosity of an electrolyte solution system becomes high, which affects safety performance and electrochemical performance of the battery. When $A/B > 2$, the percentage of the area of the double-sided hot melt adhesive to the area of the long and wide surface of the bare cell is relatively large, which seriously affects infiltration of the electrolyte solution into the bare cell, resulting in a decrease in an

amount of residual liquid and deterioration of high-temperature cycling performance of the battery; or the percentage of the mass of the carbonate solvent in the total mass of the organic solvent in the electrolyte solution is relatively low, which deteriorates high-temperature cycling performance and safety performance of the battery (a hot box pass rate is reduced). Therefore, a control ratio is $0.5 \le A/B \le 2$.

According to an implementation of the present disclosure, $5\% \le A \le 90\%$, for example, A is 5%, 10%, 15%, 20%, 25%, 30%, 35%, 40%, 45%, 50%, 55%, 60%, 65%, 70%, 75%, 80%, 85%, 90%, or a point value in a range formed by any two of the foregoing values. When $5\% \le A \le 90\%$, it avoids that the percentage of the area of the double-sided hot melt adhesive to the area of the long and wide surface of the bare cell is relatively small, there is no effect of fixing the bare cell, thereby reducing safety performance of the battery. It also avoids that the percentage of the area of the double-sided hot melt adhesive to the area of the long and wide surface of the bare cell is relatively large, which affects infiltration of the electrolyte solution into the bare cell, resulting in a decrease in an amount of residual liquid and deterioration of high-temperature cycling performance of the battery.

In an example, $5\% \le A \le 60\%$.

According to an implementation of the present disclosure, $20\% \le B \le 80\%$, for example, B, is 20%, 25%, 30%, 35%, 40%, 45%, 50%, 55%, 60%, 65%, 70%, 75%, 80%, or a point value in a range formed by any two of the foregoing values. When $B < 20\%$, the percentage of the mass of the carbonate solvent in the total mass of the organic solvent in the electrolyte solution is too less, and thus high-temperature cycling performance of the battery and the hot box pass rate cannot be ensured. When $B > 80\%$, the percentage of the mass of the carbonate solvent in the total mass of the organic solvent in the electrolyte solution is relatively high, which seriously affects swelling of the double-sided hot melt adhesive and reduces safety performance. In addition, the viscosity of the electrolyte solution system is too high, and the electrical performance deteriorates. Therefore, it is controlled that $20\% \le B \le 80\%$.

In an example, $40\% \le B \le 80\%$.

According to an implementation of the present disclosure, the bare cell includes a positive electrode plate, a negative electrode plate, and a separator.

According to an implementation of the present disclosure, the bare cell is a stacked bare cell formed by stacking the positive electrode plate, the negative electrode plate, and the separator. Alternatively, the bare cell is a winding bare cell formed by winding the positive electrode piece, the negative electrode piece, and the separator.

According to an implementation of the present disclosure, the battery further includes a housing, and the housing is configured to encapsulate the bare cell.

According to an implementation of the present disclosure, the housing is disposed on an outer side of the double-sided hot melt adhesive, that is, the double-sided hot melt adhesive is disposed between the bare cell and the housing.

According to an implementation of the present disclosure, the housing is a composite film material including at least three layers, the innermost layer is polyethylene and/or polypropylene with good heat sealing performance and electrolyte solution corrosion resistance, the intermediate layer is aluminum foil with good corrosion resistance to water vapor, air and acid, and the outermost layer is a multilayer thin film layer.

According to an implementation of the present disclosure, the housing is, for example, an aluminum-plastic film, for example, an aluminum-plastic film of a model DNP 153 purchased commercially.

According to an implementation of the present disclosure, a thickness of the housing ranges from 65 μm to 250 μm, for example, the thickness is 65 μm, 70 μm, 80 μm, 90 μm, 100 μm, 110 μm, 120 μm, 130 μm, 140 μm, 150 μm, 160 μm, 170 μm, 180 μm, 190 μm, 200 μm, 210 μm, 220 μm, 230 μm, 240 μm, 250 μm, or a point value in a range formed by any two of the foregoing values.

According to an implementation of the present disclosure, the thickness of the housing refers to a thickness of the middle area of the housing.

According to an implementation of the present disclosure, a thickness of the double-sided hot melt adhesive ranges from 4 μm to 20 μm, for example, the thickness is 4 μm, 5 μm, 6 μm, 7 μm, 8 μm, 9 μm, 10 μm, 11 μm, 12 μm, 13 μm, 14 μm, 15 μm, 16 μm, 17 μm, 18 μm, 19 μm, 20 μm, or a point value in a range formed by any two of the foregoing values.

According to an implementation of the present disclosure, the double-sided hot melt adhesive includes a high melting point base film and a hot melt material, and the hot-melt material is disposed on both sides of the high melting point base film. The high melting point base film is at least one of polytetrafluoroethylene, polyester, polyimide, polyethylene, or polypropylene, and the hot melt material is at least one of modified polypropylene or modified polyethylene.

According to an implementation of the present disclosure, the long and wide surface refers to a surface on which a length and a width of a bare cell are located.

According to an implementation of the present disclosure, a positive electrode active material in the positive electrode plate is at least one of lithium manganate oxide, lithium iron phosphate, a lithium-nickel-cobalt-manganese ternary material, lithium nickel manganese oxide, or lithium-rich manganese-based material.

According to an implementation of the present disclosure, a negative active material in the negative electrode plate is at least one of artificial graphite, natural graphite, hard carbon, soft carbon, mesocarbon microbead, a silicon-based negative electrode material, or a lithium-containing metal composite oxide material.

According to an implementation of the present disclosure, the lithium salt is selected from at least one of lithium hexafluorophosphate ($LiPF_6$), lithium difluorophosphate, lithium tetrafluoroborate, lithium hexafluoroarsenate(V), lithium perchlorate, lithium bis(fluorosulfonyl)imide, lithium bis(trifluoromethanesulphonyl)imide, lithium bisoxalate borate, or lithium difluorooxalate borate.

According to an implementation of the present disclosure, a percentage of a mass of the lithium salt in a total mass of the electrolyte solution ranges from 12 wt% to 18 wt%, for example, is 12 wt%, 13 wt%, 14 wt%, 15 wt%, 16 wt%, 17 wt%, 18 wt%, or a point value in a range formed by any two of the foregoing values.

According to an implementation of the present disclosure, the carbonate solvent is selected from at least one of propylene carbonate, ethyl methyl carbonate, ethylene carbonate (EC), dimethyl carbonate (DMC), diethyl carbonate, or fluoroethylene carbonate.

According to an implementation of the present disclosure, the organic solvent further includes at least one of following compounds: γ-butyrolactone, sulfolane, methyl formate, ethyl formate, propyl formate, butyl formate, methyl acetate, ethyl acetate, propyl acetate, butyl acetate, methyl propionate, ethyl propionate (EP), propyl propionate (PP), butyl propionate, methyl butyrate, ethyl butyrate, propyl butyrate, or butyl butyrate.

According to an implementation of the present disclosure, a percentage of a mass of the organic solvent in a total mass of the electrolyte solution ranges from 10 wt% to 80 wt%, for example, is 10 wt%, 20 wt%, 30 wt%, 40 wt%, 50 wt%, 60 wt%, 70 wt%, 80 wt%, or a point value in a range formed by any two of the foregoing values.

According to an implementation of the present disclosure, the additive includes a first additive, and the first additive is selected from at least one of vinylene carbonate (VC), fluoroethylene carbonate (FEC), vinyl ethylene carbonate (VEC), ethylene sulfate (DTD), 1,3-propane sultone (PS), ethylene sulphite (ES), tris(trimethylsilyl) borate (TMSB), or tris(trimethylsilyl) phosphate (TMSP).

The inventors of the present disclosure find that the first additive has a good positive and negative electrode protection effect and an effect of inhibiting decomposition of lithium hexafluorophosphate, so that a side reaction inside a battery can be inhibited.

According to an implementation of the present disclosure, the additive further includes a second additive, and the second additive is selected from at least one of the compounds shown in Formula 1:

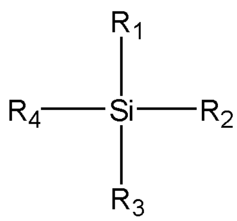

Formula 1,

where $R_1$, $R_2$, $R_3$, and $R_4$ are the same or different from each other, and are independently selected from halogen, a substituted or unsubstituted alkyl group, a substituted or unsubstituted alkenyl group, or a substituted or unsubstituted alkynyl group; and at least one group of $R_1$, $R_2$, $R_3$, or $R_4$ is selected from a substituted or unsubstituted alkenyl group, or a substituted or unsubstituted alkynyl group. If there is a substitution, a substituent is at least one of halogen or alkyl group.

According to an implementation of the present disclosure, $R_1$, $R_2$, $R_3$, and $R_4$ are the same or different from each other, and are independently selected from halogen, a substituted or unsubstituted $C_{1-6}$ alkyl group, a substituted or unsubstituted $C_{2-6}$ alkenyl group, or a substituted or unsubstituted $C_{2-6}$ alkynyl group, and at least one group of $R_1$, $R_2$, $R_3$ or $R_4$ is selected from a substituted or unsubstituted $C_{2-6}$ alkenyl group, or a substituted or unsubstituted $C_{2-6}$ alkynyl group. If there is a substitution, a substituent is at least one of halogen or a $C_{1-6}$alkyl group.

According to an implementation of the present disclosure, $R_1$, $R_2$, $R_3$, and $R_4$ are the same or different from each other, and are independently selected from halogen, a substituted or unsubstituted $C_{1-3}$ alkyl group, a substituted or unsubstituted $C_{2-3}$ alkenyl group, or a substituted or unsubstituted $C_{2-3}$ alkynyl group, and at least one group of $R_1$, $R_2$, $R_3$ or $R_4$ is selected from a substituted or unsubstituted $C_{2-3}$ alkenyl group, or a substituted or unsubstituted $C_{2-3}$ alkynyl group. If there is a substitution, a substituent is at least one of halogen or a $C_{1-3}$alkyl group.

According to an implementation of the present disclosure, a compound of Formula 1 is selected from at least one of following compound I to compound IV:

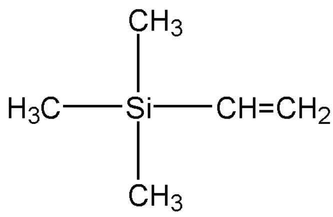

compound I

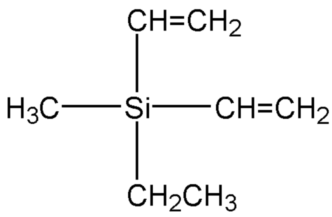

compound II

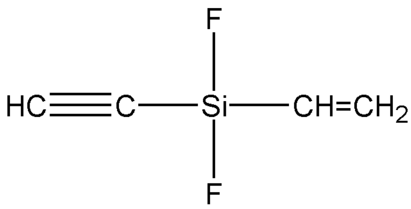

compound III

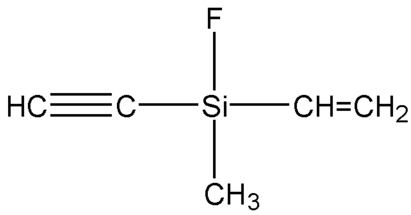

compound IV.

According to an implementation of the present disclosure, a percentage of a mass of the first additive in a total mass of the electrolyte solution ranges from 0.5 wt% to 8 wt%, for example, is 0.5 wt%, 0.6 wt%, 0.7 wt%, 0.8 wt%, 0.9 wt%, 1 wt%, 1.2 wt%, 1.5 wt%, 1.8 wt%, 2 wt%, 2.2 wt%, 2.5 wt%, 2.8 wt%, 3 wt%, 3.2 wt%, 3.5 wt%, 3.6 wt%, 3.8 wt%, 4 wt%, 5 wt%, 6 wt%, 7 wt%, 8 wt%, or a point value in a range formed by any two of the foregoing values.

According to an implementation of the present disclosure, a percentage of a mass of the second additive in a total mass of the electrolyte solution ranges from 0.3 wt% to 4 wt%, for example, is 0.3 wt%, 0.4 wt%, 0.5 wt%, 0.6 wt%, 0.7 wt%, 0.8 wt%, 0.9 wt%, 1 wt%, 1.2 wt%, 1.5 wt%, 1.8 wt%, 2 wt%, 2.2 wt%, 2.5 wt%, 2.8 wt%, 3 wt%, 3.2 wt%, 3.5 wt%, 3.6 wt%, 3.8 wt%, 4 wt%, or a point value in a range formed by any two of the foregoing values.

Beneficial effects of the present disclosure are as follows:

The present disclosure provides a battery, in particular a battery with high safety performance. According to the present disclosure, a percentage of an area of a double-sided hot melt adhesive to an area of a long and wide surface of a bare cell and a percentage of a mass of a carbonate solvent in an electrolyte solution to a total mass of an organic solvent in the electrolyte solution are optimized, so as to ensure optimal performance of the electrolyte solution while reducing an impact of the carbonate solvent on swelling of the double-sided hot melt adhesive, and maintain adhesive of the double-sided hot melt adhesive. In addition, a compound shown in Formula 1 is added to the electrolyte solution, so that a dense and stable interface film may be formed at a negative electrode, polymerization reaction can also take place to absorb heat when an internal temperature of the battery rises, so as to reduce a temperature of a system and a risk of thermal runaway, thereby improving safety performance of the battery.

## BRIEF DESCRIPTION OF THE DRAWINGS

FIG. 1 is a diagram of a position where a hot melt adhesive is pasted inside the battery.

Reference numerals are as follows: 1. housing, 2. bare cell, and 3. double-sided hot melt adhesive.

## DETAILED DESCRIPTION OF THE EMBODIMENTS

The following further describes the present disclosure in detail with reference to specific embodiments. It should be understood that the following embodiments are merely for the purposes of illustrating and explaining the present disclosure, and should not be construed as limiting the protection scope of the present disclosure. Any technology implemented based on the foregoing contents of the present disclosure falls within the protection scope of the present disclosure.

The experimental method used in the following examples is a conventional method unless otherwise specified. The reagent, the material, and the like used in the following examples may be obtained from a commercial channel without special description.

Preparation of a lithium-ion battery

(1) Preparation of a positive electrode plate

A positive electrode active material lithium nickel cobalt manganese oxide (NCM622), a binder polyvinylidene fluoride (PVDF), and a conductive agent acetylene black were mixed at a weight ratio of 96.5:2:1.5, added with N-methylpyrrolidone (NMP). The mixture was stirred under action of a vacuum mixer until a mixed system became a positive electrode slurry with uniform fluidity. The positive electrode slurry was evenly applied on aluminum foil having a thickness of 7 μm. The coated aluminum foil was baked in a five-stage oven with different temperatures and then dried in an oven at 120°C for 8 hours, followed by rolling and cutting, to obtain the positive electrode plate.

(2) Preparation of a negative electrode plate

A negative electrode active material artificial graphite, a thickener sodium carboxymethyl cellulose (CMC-Na), a binder styrene-butadiene rubber, a conductive agent acetylene black, and a conductive agent single-walled carbon nanotube (SWCNT) were mixed at a weight ratio of 95.9:1:2:1:0.1, added into deionized water. The mixture was stirred under action of a vacuum mixer to obtain a negative electrode slurry. The negative electrode slurry was evenly applied on copper foil having a thickness of 6 μm, and then baking (temperature: 85°C, time: 5 hours), rolling and die cutting were carried out to obtain the negative electrode plate.

(3) Preparation of an electrolyte solution

In an argon-filled glove box (moisture < 10 ppm, oxygen < 1 ppm), EC, DMC, EP, and PP were evenly mixed, where a sum of masses of EC and DMC is a percentage B of a mass of a carbonate solvent in an electrolyte solution in a total mass of an organic solvent in the electrolyte solution. A mass ratio of EC to DMC is 1:1, and a mass ratio of EP to PP is 1:1. Then 14 wt% $LiPF_6$ and an additive were rapidly added to the mixed solution, and the mixture was stirred evenly to obtain the electrolyte solution.

(4) Preparation of a separator

A coating layer polyethylene separator with a thickness of 9 μm is selected.

(5) Preparation of a lithium-ion battery

The prepared positive electrode plate, separator, and negative electrode plate were wound to obtain an unfilled bare cell. A layer of double-sided hot melt adhesive (the high melting point base film is polytetrafluoroethylene, and the hot melt material is modified polypropylene) was applied on upper and lower surfaces (the surfaces on which the length and width are located) of the bare cell, then the bare cell coated with the double-sided hot melt adhesive was placed in a punched shell (purchased from Daoming Optics & Chemical Co., Ltd., where the model is DNP153), injected with the prepared electrolyte solution. After processes such as vacuum packaging, standing, forming, shaping, and sorting, the lithium-ion battery required was obtained.

Methods for testing high-temperature cycling performance and safety performance of lithium-ion batteries prepared in Examples and Comparative Examples are as follows.

(1) Drop test: A battery was placed in a 25°C thermostat to be charged at a constant current of 0.5C to 4.35V and then charged at a constant voltage to 0.05C. Then the battery is placed in a 25°C environment for drop test. The battery is allowed to be dropped from a height of 1 meter onto a concrete floor, where the process was repeated three times for one battery. In this process, it ensures that each random direction of the battery is impacted when the battery falls. If there is leakage, catching fire or explosion, it is determined as failure. Ten batteries were tested in each group.

(2) 55°C cycle test: An obtained battery was placed in an environment of (55±2)°C for 2 to 3 hours. When the body of the battery reached (55±2)°C, the battery was charged to an upper limit voltage 4.25 V at a constant current of 1C and a constant voltage, where a cut-off current was 0.05C. The battery was left aside for 5 minutes after being fully charged, and then discharged at a constant current of 1C to a cut-off voltage of 3.0 V The highest discharge capacity in the first three cycles was recorded as an initial capacity Q1. When a number of cycles reached a required value, the last discharge capacity Q2 of the battery was recorded. Recorded results are shown in Table 2. The calculation formula used is as follows: Capacity retention rate (%) = Q2/Q1 × 100%.

(3) Hot box test: A prepared lithium-ion battery was placed in a 135°C thermostat for 120 minutes, to observe whether the battery catches fire or explodes. If the battery catches fire or explodes, it is determined as failure. Ten batteries were tested in each group.

Comparative examples 1-5 and Examples 1-8

The additives in Comparative examples 1-5 and Examples 1-8 are vinylene carbonate accounting for 1 wt% of a total mass of an electrolyte solution, fluoroethylene carbonate accounting for 1 wt% of a total mass of an electrolyte solution, ethylene sulfate accounting for 2 wt% of a total mass of an electrolyte solution, and 1,3-propane sultone accounting for 2 wt% of a total mass of an electrolyte solution.

Table 1 Performance test results and composition of batteries in Comparative examples 1-5 and Examples 1-8

| | A/B | A(%) | B (%) | Hot box pass rate | Drop pass rate | Capacity retention rate after 500T at 55°C (%) |
|---|---|---|---|---|---|---|
| Comparative Example 1 | 0.15 | 3 | 20 | 2/10 pass | 0/10 pass | 74.3 |
| Comparative Example 2 | 4.75 | 95 | 20 | 2/10 pass | 10/10 pass | 60.5 |
| Comparative Example 3 | 6 | 60 | 10 | 2/10 pass | 10/10 pass | 55.2 |
| Comparative Example 4 | 0.05 | 3 | 60 | 5/10 pass | 1/10 pass | 90.1 |
| Example 1 | 0.83 | 50 | 60 | 5/10 pass | 10/10 pass | 83.1 |
| Example 2 | 1.33 | 80 | 60 | 4/10 pass | 10/10 pass | 78.6 |
| Example 3 | 1.5 | 90 | 60 | 4/10 pass | 10/10 pass | 70.5 |
| Example 4 | 1.58 | 95 | 60 | 4/10 pass | 10/10 pass | 67.2 |
| Example 5 | 0.67 | 60 | 90 | 6/10 pass | 6/10 pass | 71.7 |
| Example 6 | 0.56 | 50 | 90 | 6/10 pass | 5/10 pass | 73.8 |
| Example 7 | 0.625 | 50 | 80 | 5/10 pass | 7/10 pass | 85.3 |
| Example 8 | 1.25 | 50 | 40 | 3/10 pass | 10/10 pass | 81.6 |
| Comparative Example 5 | 5 | 50 | 10 | 1/10 pass | 10/10 pass | 57.3 |

It may be learned from the test results for Comparative examples 1-5 and Examples 1-8 that, a lithium-ion battery has the best performance in the range of $5\% \leq A \leq 90\%$ and $0.5 \leq A/B \leq 2$. The reason is that when an area of a double-sided hot melt adhesive is too small, a bonding effect cannot be achieved; when the area of the double-sided hot melt adhesive is too large, a content of a carbonate solvent is relatively small, that is, a value of A/B becomes large, which seriously affects infiltration of a body of a battery cell, resulting in a decrease in an amount of residual liquid and deterioration of high-temperature cycling performance.

It may be learned from the test results for Comparative examples 1-5 and Examples 1-8 that, a lithium-ion battery has the best performance in the range of $20\% \leq B \leq 80\%$ and $0.5 \leq A/B \leq 2$. The reason is that, when a content of the high boiling point carbonate solvent is too small, high-temperature cycling performance and the hot box pass rate deteriorate; when the content of the carbonate solvent is too large, that is, a value of A/B becomes smaller, swelling of the double-sided hot melt adhesive is increased, the drop pass rate is reduced, and viscosity of the electrolyte solution system is too high, which is not conducive to the cycling performance.

Examples 9-14

The additives in Examples 9-14 are vinylene carbonate accounting for 1 wt% of a total mass of an electrolyte solution, fluoroethylene carbonate accounting for 1 wt% of a total mass of an electrolyte solution, ethylene sulfate accounting for 2 wt% of a total mass of an electrolyte solution, 1,3-propane sultone accounting for 2 wt% of a total mass of an electrolyte solution, and a compound showing in Formula 1.

Table 2 Performance test results and composition of batteries in Examples 9-14

| | A/B | A(%) | B (%) | Type and content of a second additive (%) | Hot box pass rate | Drop pass rate | Capacity retention rate after 500T at 55°C (%) |
|---|---|---|---|---|---|---|---|
| Example 9 | 0.625 | 50 | 80 | Compound II: 0.3 | 6/10 pass | 7/10 pass | 87.1 |
| Example 10 | 0.625 | 50 | 80 | Compound II: 1 | 10/10 pass | 10/10 pass | 92.4 |
| Example 11 | 0.625 | 50 | 80 | Compound III: 1 | 10/10 pass | 10/10 pass | 92.3 |
| Example 12 | 0.625 | 50 | 80 | Compound IV: 1 | 10/10 pass | 10/10 pass | 92.6 |
| Example 13 | 0.625 | 50 | 80 | Compound I: 2 | 10/10 pass | 10/10 pass | 93.2 |
| Example 14 | 0.625 | 50 | 80 | Compound I: 4 | 7/10 pass | 9/10 pass | 91.6 |
| Note: In all examples of the present disclosure, a thickness of the housing ranges from 65 μm to 250 μm, and a thickness of the double-sided hot melt adhesive ranges from 4 μm to 20 μm. | | | | | | | |

It may be learned from Examples 7 and 9-14 that, when the compound shown in Formula 1 is introduced into the electrolyte solution, the hot box pass rate of the battery can be significantly improved, and the battery has relatively good safety performance.

The implementations of the present disclosure are described above. However, the present disclosure is not limited to the foregoing implementations. Any modifications, equivalent replacements, improvements, and the like within the spirit and principle of the present disclosure shall fall within the scope of protection of the present disclosure.

## Claims

1. A battery, wherein the battery comprises a bare cell, a double-sided hot melt adhesive, and an electrolyte solution; the double-sided hot melt adhesive is disposed on a long and wide surface of the bare cell; and the electrolyte solution comprises a lithium salt, an organic solvent, and an additive, and the organic solvent comprises at least one carbonate solvent; and

   the battery satisfies following condition:

$$0.5 \leq A/B \leq 2,$$

   wherein A is a percentage of an area of the double-sided hot melt adhesive to an area of the long and wide surface of the bare cell, and B is a percentage of a mass of the carbonate solvent to a total mass of the organic solvent in the electrolyte solution.

2. The battery according to claim 1, wherein 5% ≤ A ≤ 90%; and preferably, 5% ≤ A ≤ 60%.

3. The battery according to claim 1 or 2, wherein 20% ≤ B ≤ 80%; and preferably, 40% ≤ B ≤ 80%.

4. The battery according to any one of claims 1 to 3, wherein the battery further comprises a housing, and the double-sided hot melt adhesive is disposed between the bare cell and the housing; and
   preferably, a thickness of the housing ranges from 65 μm to 250 μm.

5. The battery according to claim 4, wherein the housing is a composite film material comprising at least three layers, an innermost layer is polyethylene and/or polypropylene, an intermediate layer is aluminum foil, and an outermost layer is a multilayer thin film layer; and
   preferably, the housing is an aluminum-plastic film.

6. The battery according to any one of claims 1 to 5, wherein the double-sided hot melt adhesive comprises a high melting point base film and a hot melt material, and the hot melt material is disposed on both sides of the high melting point base film; and the high melting point base film is at least one of polytetrafluoroethylene, polyester, polyimide, polyethylene, or polypropylene, and the hot melt material is at least one of modified polypropylene or modified

polyethylene; and
preferably, a thickness of the double-sided hot melt adhesive ranges from 4 μm to 20 μm.

**7.** The battery according to any one of claims 1 to 6, wherein the carbonate solvent is selected from at least one of propylene carbonate, ethyl methyl carbonate, ethylene carbonate, dimethyl carbonate, diethyl carbonate, or fluoroethylene carbonate.

**8.** The battery according to any one of claims 1 to 7, wherein the additive comprises a first additive, and the first additive is selected from at least one of vinylene carbonate, fluoroethylene carbonate, vinylethylene carbonate, ethylene sulfate, 1,3-propane sultone, ethylene sulphite, tris(trimethylsilyl) borate, or tris(trimethylsilyl) phosphate.

**9.** The battery according to any one of claims 1 to 8, wherein the additive further comprises a second additive, and the second additive is selected from at least one of compounds in Formula 1:

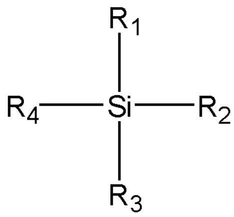

Formula 1,

wherein $R_1$, $R_2$, $R_3$, and $R_4$ are the same or different from each other, and are independently selected from halogen, a substituted or unsubstituted alkyl group, a substituted or unsubstituted alkenyl group, or a substituted or unsubstituted alkynyl group, and at least one group of $R_1$, $R_2$, $R_3$ or $R_4$ is selected from a substituted or unsubstituted alkenyl group, or a substituted or unsubstituted alkynyl group; and when there is a substitution, a substituent is at least one of halogen or alkyl group;and
preferably, $R_1$, $R_2$, $R_3$, and $R_4$ are the same or different from each other, and are independently selected from halogen, a substituted or unsubstituted $C_{1-3}$ alkyl group, a substituted or unsubstituted $C_{2-3}$ alkenyl group, or a substituted or unsubstituted $C_{2-3}$ alkynyl group, and at least one group of $R_1$, $R_2$, $R_3$ or $R_4$ is selected from a substituted or unsubstituted $C_{2-3}$ alkenyl group, or a substituted or unsubstituted $C_{2-3}$ alkynyl group; and when there is a substitution, a substituent is at least one of halogen or $C_{1-3}$ alkyl group.

**10.** The battery according to claim 8, wherein a percentage of a mass of the first additive in a total mass of the electrolyte solution ranges from 0.5 wt% to 8 wt%.

**11.** The battery according to claim 9, wherein a percentage of a mass of the second additive in a total mass of the electrolyte solution ranges from 0.3 wt% to 4 wt%.

**12.** The battery according to any one of claims 1 to 11, wherein the lithium salt is selected from at least one of lithium hexafluorophosphate, lithium difluorophosphate, lithium tetrafluoroborate, lithium hexafluoroarsenate(V), lithium perchlorate, lithium bis(fluorosulfonyl)imide, lithium bis(trifluoromethanesulphonyl)imide, lithium bis(oxalate)borate, or lithium difluorooxalate borate; and
preferably, a percentage of a mass of the lithium salt in a total mass of the electrolyte solution ranges from 12 wt% to 18 wt%.

**13.** The battery according to any one of claims 1 to 12, wherein the organic solvent further comprises at least one of following compounds: γ-butyrolactone, sulfolane, methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, or butyl butyrate; and
preferably, a percentage of a mass of the organic solvent in a total mass of the electrolyte solution ranges from 10 wt% to 80 wt%.

**14.** The battery according to any one of claims 1 to 13, wherein the bare cell comprises a positive electrode plate, a negative electrode plate, and a separator;

preferably, the bare cell is a stacked bare cell formed by stacking the positive electrode plate, the negative electrode plate, and the separator; and

preferably, the bare cell is a winding bare cell formed by winding the positive electrode plate, the negative electrode plate, and the separator.

**15.** The battery according to claim 14, wherein a positive electrode active material in the positive electrode plate is at least one of lithium manganate oxide, lithium iron phosphate, a lithium-nickel-cobalt-manganese ternary material, lithium nickel manganese oxide, or lithium-rich manganese-based material; and/or

a negative active material in the negative electrode plate is at least one of artificial graphite, natural graphite, hard carbon, soft carbon, mesocarbon microbead, a silicon-based negative electrode material, or a lithium-containing metal composite oxide material.

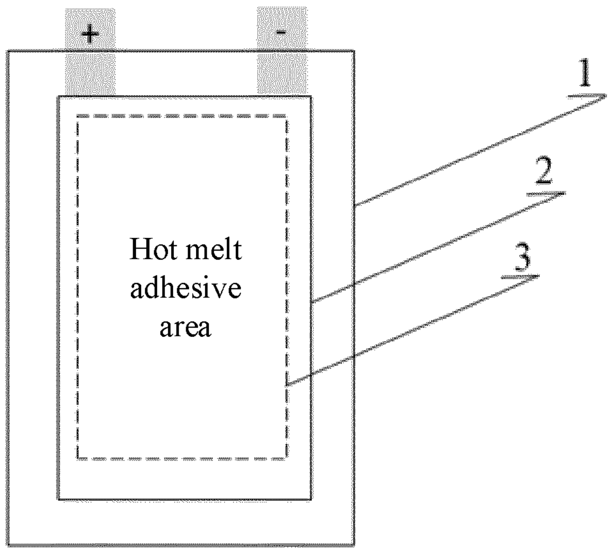


FIG. 1

# INTERNATIONAL SEARCH REPORT

International application No.
**PCT/CN2023/126952**

**A. CLASSIFICATION OF SUBJECT MATTER**

H01M10/0525(2010.01)i; H01M10/0569(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 热熔胶, 双面胶, 胶带, 粘合, 胶合, 黏合, 粘结, 粘贴, 面积, 大小, 长宽, 尺寸, 溶剂, 质量, 含量, 百分比, hot-melt, adhesive, tape, area, solvent, electrolyte

**C. DOCUMENTS CONSIDERED TO BE RELEVANT**

| Category* | Citation of document, with indication, where appropriate, of the relevant passages | Relevant to claim No. |
|---|---|---|
| PX | CN 115566254 A (ZHUHAI COSMX POWER BATTERY CO., LTD.) 03 January 2023 (2023-01-03)<br>description, paragraphs [0004]-[0072] | 1-15 |
| X | CN 102255100 A (SAMSUNG SDI CO., LTD.) 23 November 2011 (2011-11-23)<br>description, paragraphs [0047]-[0183] | 1-15 |
| A | CN 207468544 U (HUIZHOU TCL HYPERPOWER BATTERIES INC. et al.) 08 June 2018 (2018-06-08)<br>entire document | 1-15 |
| A | CN 210668585 U (HUIZHOU LIWINON NEW ENERGY TECHNOLOGY CO., LTD.) 02 June 2020 (2020-06-02)<br>entire document | 1-15 |
| A | JP 2003151634 A (ASAHI KASEI CORP.) 23 May 2003 (2003-05-23)<br>entire document | 1-15 |
| A | US 2021036380 A1 (SANYO ELECTRIC CO., LTD.) 04 February 2021 (2021-02-04)<br>entire document | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 December 2023** | **11 December 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/126952**

| Patent document cited in search report | | | Publication date (day/month/year) | Patent family member(s) | | | Publication date (day/month/year) |
|---|---|---|---|---|---|---|---|
| CN | 115566254 | A | 03 January 2023 | None | | | |
| CN | 102255100 | A | 23 November 2011 | JP | 2011243553 | A | 01 December 2011 |
| | | | | JP | 5508969 | B2 | 04 June 2014 |
| | | | | KR | 20110127830 | A | 28 November 2011 |
| | | | | KR | 101136254 | B1 | 19 April 2012 |
| | | | | US | 2011287302 | A1 | 24 November 2011 |
| | | | | US | 8541132 | B2 | 24 September 2013 |
| | | | | EP | 2273601 | A1 | 12 January 2011 |
| CN | 207468544 | U | 08 June 2018 | None | | | |
| CN | 210668585 | U | 02 June 2020 | None | | | |
| JP | 2003151634 | A | 23 May 2003 | None | | | |
| US | 2021036380 | A1 | 04 February 2021 | WO | 2019163392 | A1 | 29 August 2019 |
| | | | | JPWO | 2019163392 | A1 | 04 February 2021 |

Form PCT/ISA/210 (patent family annex) (July 2022)